# EUROPEAN PATENT APPLICATION

(11) **EP 3 229 086 A1**
(43) Date of publication of application: **11.10.2017**
(21) Application number: 14907606.9
(22) Date of filing: 03.12.2014
(51) Int. Cl.: G05B 19/05

(54) **PLC FUNCTION INCORPORATED DRIVE CONTROL DEVICE**

(71) Applicant: Fuji Electric Co., Ltd., Kawasaki-shi, Kanagawa 210-9530 (JP)
(72) Inventor: YAHATA, Takashi, Kawasaki-shi Kanagawa 210-9530 (JP); HIGUCHI, Shinichi, Kawasaki-shi Kanagawa 210-9530 (JP)
(74) Representative: Appelt, Christian W.
(86) International application number: PCT/JP2014/081946
(87) International publication number: WO 2016/088215

(57) **Abstract**

One portion of a region of operating parameter storage means (13) that stores a value and attribute information of a drive control device operating parameter, and a code as a search key, is allotted for a PLC, and furthermore, update operating parameter storage means (42) that correlates and stores attribute information, and an index as a search key, for each PLC operating parameter, linked information storage means (14) that correlates and saves a code and index, and operating parameter update means (12) that, when an index corresponding to a code input from an operating panel exists in the linked information storage means, extracts attribute information correlated to the index from the update operating parameter storage means, and transmits the attribute information and an operating parameter value corresponding to the code to the operating panel (2), are included.

## Description

### Technical Field

The present invention relates to a drive control device that controls a load such as a motor, and in particular, relates to a PLC (Programmable Logic Controller) function-incorporating drive control device that incorporates a PLC function, thereby enabling efficient parameter information management.

### Background Art

Existing drive control devices that carry out efficient control of a load such as a motor by including an inverter or the like are such that sequential control is realized by connecting a PLC as an upper level device. Furthermore, in recent years, when the necessary sequential control is not complex, devices wherein sequential control is realized by a PLC function being incorporated (hereafter referred to as "PLC function-incorporating drive control devices") are also being developed by an optional PLC device being embedded in a drive control device, or by a PLC itself being incorporated in a drive control device (for example, refer to PTL 1).

In general, a drive control device is such that it is necessary to set the values of parameters (hereafter referred to as operating parameters) that fix several hundred to several thousand kinds of operating condition in accordance with a user's application. A method whereby the drive control device is connected to an external instrument such as a personal computer or operator unit and operating parameter values are set is used for existing drive control devices. Meanwhile, a method whereby operating parameter values are input from a dedicated operating panel is used for a PLC function-incorporating drive control device.

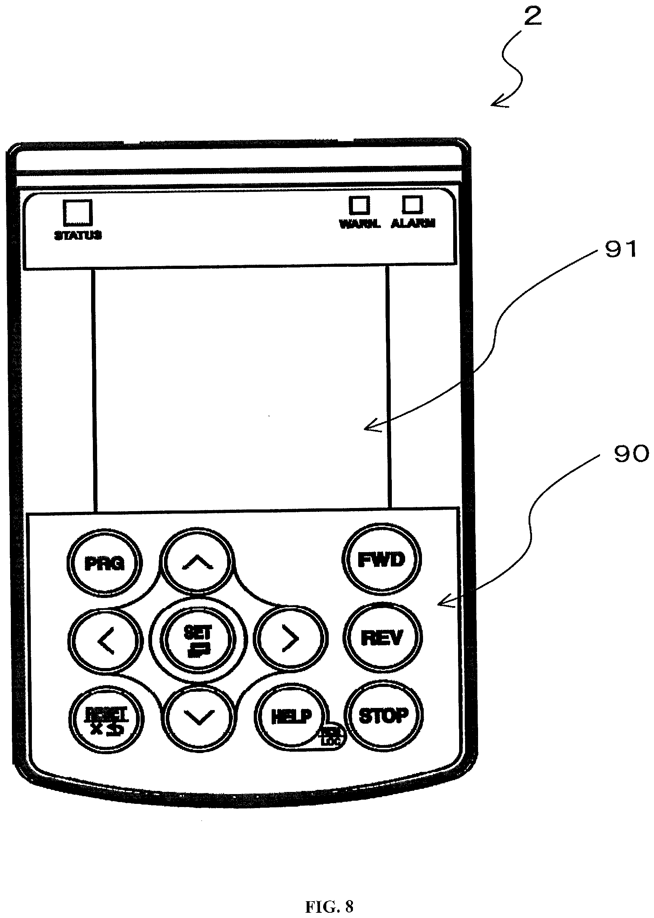

Fig. 8 is an illustration of an operating panel screen of a PLC function-incorporating drive control device. In the drawing, an operating panel 2 has an operating key group 90, with which an operating parameter and attribute information thereof are selected and a value is set, and a screen area 91 on which selected data and a setting value are displayed. The operating panel 2 is normally configured so as to be attachable to and detachable from a drive control device.

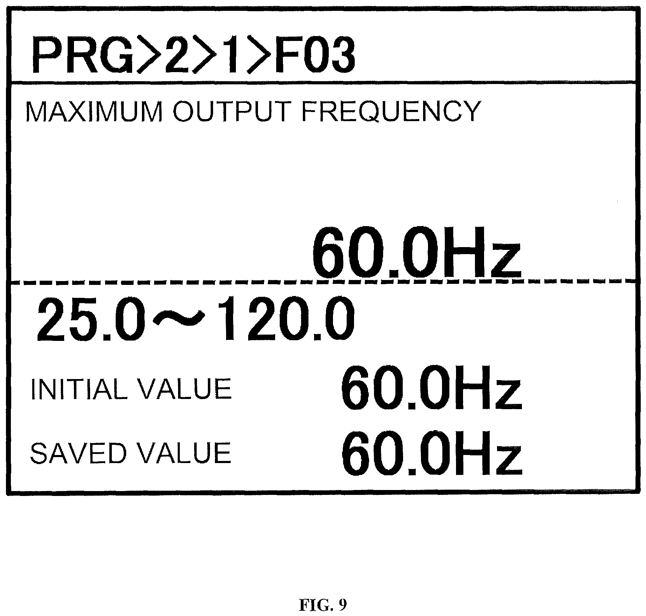

Fig. 9 is an example of a screen display when setting an operating parameter of a drive control device using the heretofore described operating panel. An operating parameter value, and attribute information such as an initial value, upper and lower limit values, and a unit, are displayed on the screen of the operating panel 2.

There is a variety of operating parameter attribute information depending on a user's application, and there are existing proposals for preventing the user from erroneously setting an operating parameter.

For example, a method of setting initial parameters for an inverter device including a multiple of parameter data groups unique to a user, wherein initial parameter settings can be carried out by selecting an arbitrary data group, is proposed in PTL 2. An inverter device such that a user can easily carry out switching and restoring of settings of an initial value data group, whereby a mistake in parameter setting by the user when changing data can be avoided, is proposed in PTL 3.

Also, an inverter device and parameter setting method such that a user, by extracting and displaying a parameter that needs adjusting when a problem occurs, can manipulate a necessary parameter setting without referring to an instruction manual or the like are proposed in PTL 4.

### Citation List

### Patent Literature

PTL 1: JP-A-2006-280090
PTL 2: JP-A-08-237991
PTL 3: JP-A-2004-040966
PTL 4: JP-A-2007-135325

### Summary of Invention

### Technical Problem

Herein, in the case of a PLC function-incorporating drive control device wherein a PLC and drive control device are configured integrally, there is a need to be able to display and set operating parameters not only of the drive control device but also of the PLC via the operating panel of the drive control device, and manage the operating parameters centrally.

However, a PLC function-incorporating drive control device is such that although operating parameter attribute information of a drive control device program is held in advance in a non-volatile memory such as a ROM, operating parameter attribute information of an application program that operates as a PLC function is not held. Because of this, when an operating parameter of an existing application program is displayed on the operating panel, a method adopted is such that the attribute information is uniformly set in advance to a certain value, and the operating parameter is displayed on the operating panel based on the attribute information. Using this method, a value differing from the actual operating parameter value is displayed, because of which it is necessary for a user to interpret the operating parameter displayed on the operating panel based on original attribute information written in the application program specifications.

For this reason, time is needed for setting an operating parameter of an application program that operates as a PLC function, and there is a problem in that a setting mistake is liable to occur.

Of course, correct values of operating parameter attribute information of a PLC could conceivably be saved in advance in a non-volatile memory, in the same way as that of a drive control device, but the non-volatile memory would need to be rewritten every time a PLC application program is added or changed, which is inefficient.

The invention, having been conceived in consideration of this kind of problem, has an object of providing a PLC function-incorporating drive control device such that an operating parameter of a PLC application program can be correctly displayed on an operating panel, in the same way as for a program mounted as a standard in a drive control device, and operating parameter attribute information can be efficiently updated when an application program is added or changed.

### Solution to Problem

A PLC function-incorporating drive control device according to the invention is a PLC function-incorporating drive control device (1), including operating parameter storage means (13) that, for each operating parameter, correlates and stores attribute information including an initial value and a unit of the operating parameter and a code for identifying the operating parameter,
an operating panel (2) that receives a code input and displays an operating parameter value based on attribute information,
operating parameter communication means (11) that receives a code input into the operating panel and transmits an operating parameter value correlated to the code and attribute information to the operating panel, and
a PLC function unit (4) that realizes a function of a programmable logic controller, wherein
the operating parameter storage means (13) stores a code allotted for an operating parameter of an application program that operates in the PLC function unit (4), and the PLC function-incorporating drive control device is characterized by further including
update operating parameter storage means (42) that, for each operating parameter of the application program, correlates and stores attribute information of the operating parameter and an index for identifying the operating parameter,
linked information storage means (14) that saves linked information wherein a code of the operating parameter storage means and an index of the update operating parameter storage means are correlated, and
operating parameter update means (12) that, when an index corresponding to a code received by the operating parameter communication means exists in the linked information storage means (14), extracts attribute information correlated to the index from the update operating parameter storage means (42), and transmits the attribute information and an operating parameter value corresponding to the code to the operating panel (2) via the operating parameter communication means (11).

The invention is such that one portion of a region of drive control device operating parameter storage means accessible from an operating panel in which attribute information is stored is allotted for an application program that operates in a PLC function unit. Also, an operating parameter of the application program is stored in update operating parameter storage means, with an index as a search key. Further, when linked information of a code input from the operating panel exists, operating parameter update means accesses the update operating parameter storage means, acquires operating parameter attribute information of the index linked to the code, and displays an operating parameter value on the operating panel based on the attribute information.

Because of this, the PLC application program can be developed independently of the drive control device, because of which the usability of the application can be increased, and development costs can be reduced. Also, central management, including also management of operating parameters of the PLC application program, by an existing operating panel included in a drive control device is easy.

Also, the PLC function-incorporating drive control device according to the invention is characterized by including application program execution means (41) that writes operating parameter attribute information for updating into the update operating parameter storage means. Preferably, the application program writes the linked information into the linked information storage means when the PLC function unit is started up. In this way, independence of the PLC function unit can be increased.

Also, the update operating parameter storage means of the PLC function-incorporating drive control device according to the invention has flag information that prohibits a reading from or writing into the operating panel for each operating parameter, and the application program execution means is characterized by setting the flag information corresponding to the operating parameter when writing operating parameter attribute information into the update operating parameter storage means. In particular, by displaying the fact that there are no operating parameter data on the operating panel by setting the flag information, the user is relieved of the trouble of managing the operating parameter, and a malfunction caused by the user carelessly changing attribute information can be prevented.

Also, the update operating parameter storage means of the PLC function-incorporating drive control device according to the invention has flag information that indicates whether or not attribute information corresponding to the operating parameter is set from the operating panel for each operating parameter, and the application program execution means is characterized by not writing the attribute information correlated to the flag information when the flag information is set.

Because of this, for example, when there is a so-called hot start such that the device is reset without the power supply being turned off, operation is carried out using a setting value already set by the user as an operating parameter, because of which the user can be relieved of the trouble of resetting. Advantageous Effects of Invention

According to the PLC function-incorporating drive control device of the invention, as heretofore described, an operating parameter of a PLC application program can be correctly displayed on an operating panel, in the same way as for a program mounted as a standard in a drive control device, and operating parameter attribute information can be efficiently updated when an application program is added or changed.

### Brief Description of Drawings

[Fig. 1] Fig. 1 is a diagram illustrating an overall configuration of a PLC function-incorporating drive control device 1 of an embodiment.
[Fig. 2] Fig. 2 is a data configuration example of operating parameter storage means 13 shown in Fig. 1.
[Fig. 3] Fig. 3 is a data configuration example of update operating parameter storage means 42 shown in Fig. 1.
[Fig. 4] Fig. 4 is a data configuration example of linked information storage means 14 shown in Fig. 1.
[Fig. 5] Fig. 5 is a flowchart showing steps of an operating parameter replacement process in the PLC function-incorporating drive control device 1 of the embodiment.
[Fig. 6] Fig. 6 is a screen display example of when an operating parameter is not replaced in the operating parameter replacement process shown in Fig. 5.
[Fig. 7] Fig. 7 is a screen display example of when an operating parameter is replaced in the operating parameter replacement process shown in Fig. 5.
[Fig. 8] Fig. 8 is a front view showing an example of an operating panel of an existing PLC function-incorporating drive control device.
[Fig. 9] Fig. 9 is an example of a screen display when setting an operating parameter using the operating panel of Fig. 8.

### Description of Embodiments

Hereafter, a description will be given of an embodiment of a PLC function-incorporating drive control device of the invention.

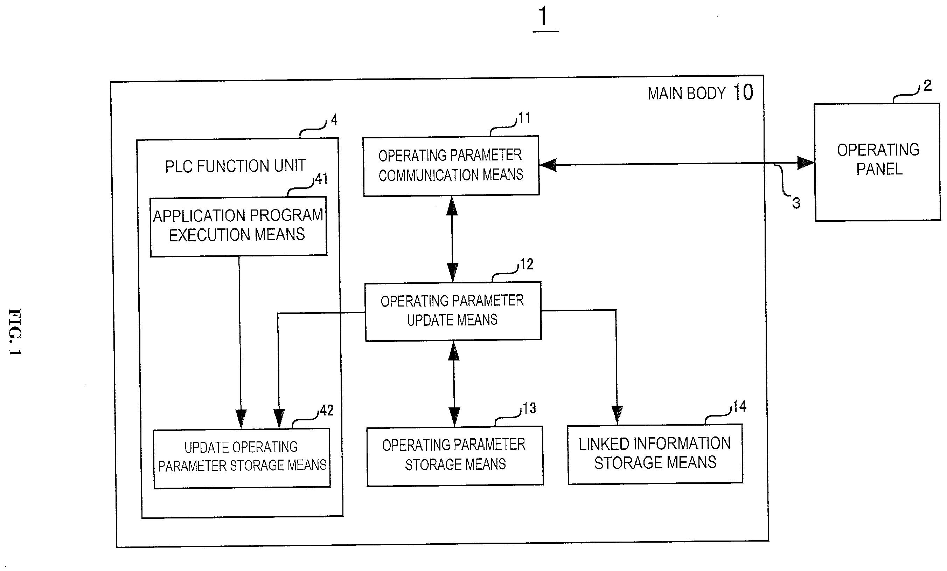

Fig. 1 is an illustration of an overall configuration of a PLC function-incorporating drive control device 1 according to the embodiment. Herein, the PLC function-incorporating drive control device 1 is configured of a PLC function-incorporating drive control device main body (hereafter referred to simply as "main body") 10 and an operating panel 2 connected via a communication line 3. A user of the PLC function-incorporating drive control device 1 controls an unshown load, such as a motor, by monitoring information displayed on the operating panel 2 and inputting a setting value change from the operating panel 2.

The main body 10 includes operating parameter communication means 11, which exchanges operating parameter data with the operating panel 2, operating parameter update means 12, which updates operating parameter attribute information, operating parameter storage means 13, which has a region in which operating parameter data for a drive control device are saved and a region in which operating parameter data allotted for a PLC are saved, and linked information storage means 14, which links data of the operating parameter storage means 13 and update operating parameter storage means 42, to be described hereafter. Herein, operating parameter data include operating parameter numerical values and attribute information.

Also, the main body 10 includes a PLC function unit 4 incorporating a PLC or optional PLC device, wherein the PLC function unit 4 executes an application program that cannot be realized by a standard function of a drive control device. Furthermore, the PLC function unit 4 includes application program execution means 41, which executes an application program, and the update operating parameter storage means 42, which saves operating parameter attribute information of the application program.

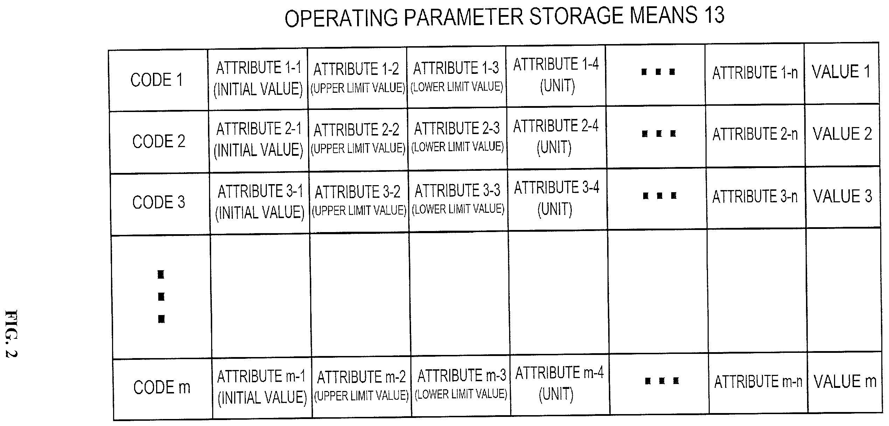

Fig. 2 is a data configuration example of the operating parameter storage means 13 included in the PLC function-incorporating drive control device main body 10 according to the embodiment.

Values of all operating parameters of the PLC function-incorporating drive control device 1, and attribute information such as initial values, upper and lower limit values, and units, are stored in the operating parameter storage means 13. Information such as the possibility or otherwise of changing from the operating panel 2 and the possibility or otherwise of changing during operation may be added to the attribute information.

As heretofore described, a value and attribute information are stored as a data set in the operating parameter storage means 13 for each operating parameter.

A code for identifying the data set of the operating parameter is set for each operating parameter, and by inputting the code of an operating parameter that needs to be displayed on the operating panel 2, the user can select the desired operating parameter, and cause the necessary information from the data set of the operating parameter to be displayed on the operating panel 2. That is, the code functions as a search key of the operating parameter.

Original attribute information data of operating parameters of a drive control device program mounted as a standard are held in advance in the operating parameter storage means 13, but in addition to these, attribute information data of an application program that operates in a PLC function are also held. Note that application program attribute information is provisionally set in advance, and is not normally the original attribute information.

The operating parameter storage means 13 shown in Fig. 2 is such that a storage region for operating parameter values, that is, the right hand column of Fig. 2 (value 1, value 2, value 3, and so on to value m), is configured of a volatile memory (for example, a RAM) that can be read from and written into by the operating parameter update means 12, and other storage regions for attribute information and the like are configured of a non-volatile memory (for example, a ROM), which can be read from the operating parameter update means 12, and which can hold stored data even when power is not supplied. Correlation of volatile memory data and non-volatile memory data may be carried out with a code as a key, or can be carried out using general existing technology, such as correlating memory addresses in advance.

Herein, an operating parameter is used in an unshown drive control device program of the main body 10 or an application program of the PLC function unit 4, and operating conditions of the program can normally be changed in accordance with the value of the operating parameter. Also, the operating parameter value may be set from the program, or may be set by the user via the operating panel 2.

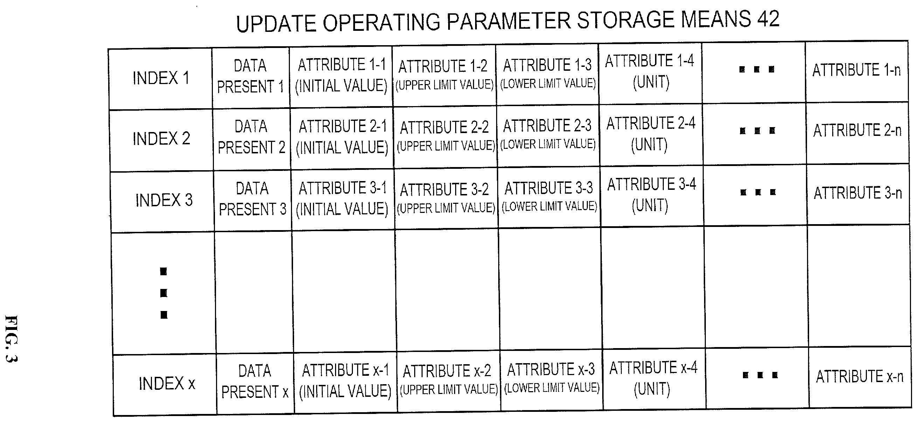

Fig. 3 is a data configuration example of the update operating parameter storage means 42 included in the PLC function unit 4 of the embodiment. The update operating parameter storage means 42 is configured of a volatile memory.

Attribute information such as an initial value, upper and lower limit values, and a unit of an operating parameter of an application program that operates in a PLC function are stored in the update operating parameter storage means 42. This attribute information may be written into the update operating parameter storage means 42 using an application program that manages attribute information and the like when, for example, a PLC function operation is started or at an arbitrary timing.

Unlike the operating parameter storage means 13, no operating parameter value is held in the update operating parameter storage means 42, but an index is set as a search key for each operating parameter attribute information data set.

The update operating parameter storage means 42 preferably includes a "data present" category for determining whether or not update attribute information is actually stored. Even when an operating parameter selected by the user is an update target operating parameter, the application program execution means 41 sets "NO" in the "data present" category when the operating parameter may be displayed on the operating panel 2 with no change to the attribute information already initially set when the PLC function is started up. Because of this, the operating parameter update means 12 can determine not to carry out a process of replacing attribute information from the operating panel 2. Rather than providing a separate "data present" category, determination may be carried out by a predetermined value being allotted to a specific category of the update operating parameter storage means 42. The "data present" category or the specific category of the update operating parameter storage means 42 functions as flag information that prohibits access from the operating panel 2.

At this point, it is not necessary that all operating parameters used in the PLC function unit 4 are held, rather it is sufficient that only operating parameters that need updating are held. Also, it is sufficient that only categories of attribute information that need replacing are held. Because of this, memory capacity can be reduced, which can be translated to a reduction in cost of the PLC function-incorporating drive control device 1.

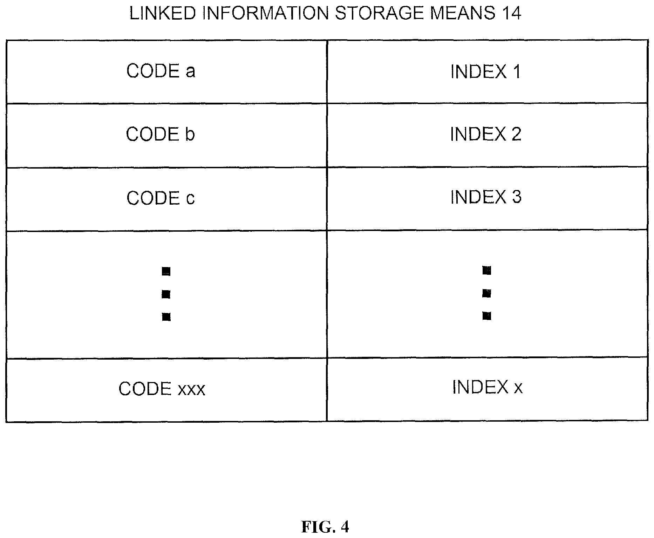

Fig. 4 is a data configuration example of the linked information storage means 14 included in the PLC function-incorporating drive control device main body 10 of the embodiment.

The code of an individual operating parameter in the operating parameter storage means 13 that is a target of operating parameter value updating, and the index of the update operating parameter storage means 42 corresponding to the code, are stored linked in the linked information storage means 14. The linked information may be stored in advance in table form in a non-volatile memory, as in Fig. 4, or can be embedded in the operating parameter update means 12 as a program that executes a determination process. Other than this, the linked information storage means 14 may be configured of a volatile memory, and the linked information automatically developed by an application program that executes an initial setting process when the PLC function unit 4 is started up.

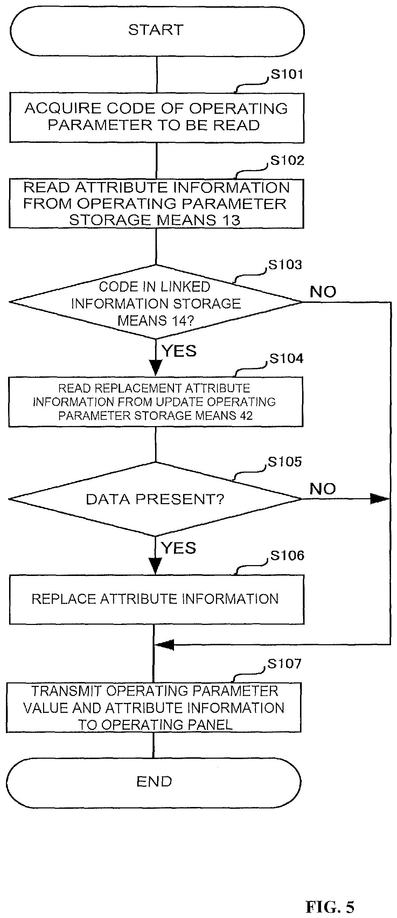

Fig. 5 is a flowchart showing steps of an operating parameter replacement process carried out by the operating parameter update means 12.

The code of an arbitrary operating parameter is input into the operating panel 2 by the user, and when the operating parameter update means 12 acquires the code via the operating parameter communication means 11 (S101), the operating parameter update means 12 acquires operating parameter attribute information corresponding to the code from the operating parameter storage means 13 (S102).

Next, the operating parameter update means 12 refers to the linked information storage means 14, and confirms whether or not the acquired operating parameter code is of an update target operating parameter (S103). If the code is not of an update target ('NO" in S103"), the operating parameter update means 12 transmits the operating parameter value and attribute information values acquired from the operating parameter storage means 13 unchanged to the operating panel 2 via the operating parameter communication means 11. The operating panel 2 displays the operating parameter value based on the attribute information values received.

Meanwhile, if the operating parameter code is of an update target ('YES" in S103"), the operating parameter update means 12 acquires the update target index value linked to the code from the linked information storage means 14, and acquires the operating parameter attribute information corresponding to the index value from the update operating parameter storage means 42 (S104).

Next, the operating parameter update means 12 checks the "data present" category from the acquired attribute information (S105), and if the "data present" category is "NO" ("NO" in S105), the operating parameter update means 12 transmits the operating parameter attribute information acquired from the operating parameter storage means 13 to the operating panel 2 via the operating parameter communication means 11.

Meanwhile, if the "data present" category is "YES" ("YES" in S105), the operating parameter update means 12 replaces the operating parameter attribute information acquired from the operating parameter storage means 13 with the attribute information acquired from the update operating parameter storage means 42 (S106).

The operating parameter update means 12 transmits the operating parameter value and updated attribute information to the operating panel 2 via the operating parameter communication means 11 (S107). The operating panel 2 displays the operating parameter value based on the updated attribute information values.

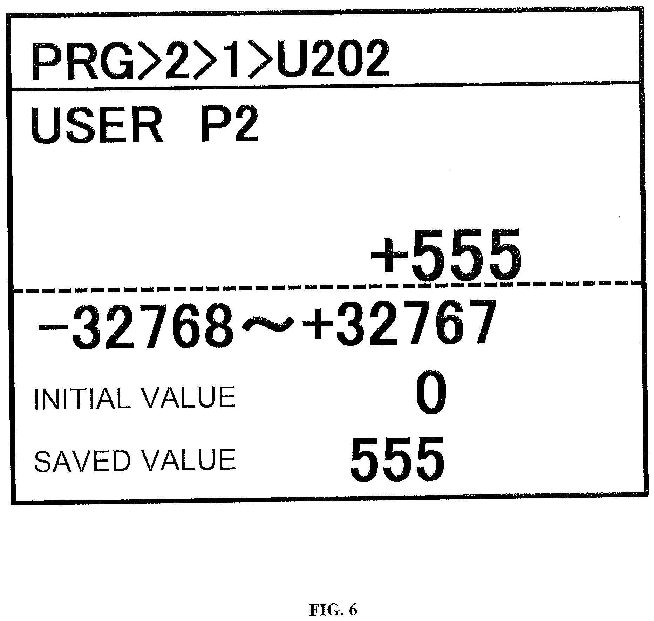

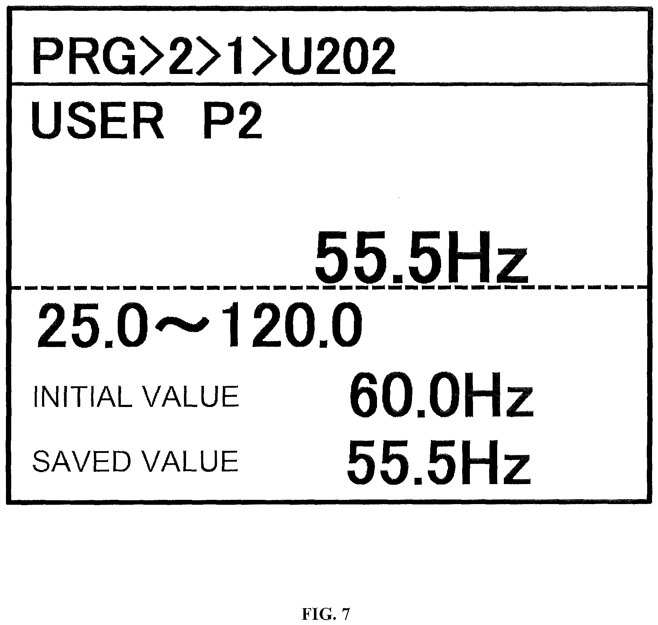

Next, a description of the above process will be given based on display screen examples of the operating panel 2 shown in Fig. 6 and Fig. 7. Fig. 6 is a display example of a case wherein operating parameters of a PLC application program are attribute information provisionally and uniformly set in advance in a non-volatile memory, and the attribute information is not original attribute information. Meanwhile, Fig. 7 is a display example of a case wherein attribute information is attribute information set from the PLC application program execution means 41 or operating panel 2, and is original attribute information.

When the user inputs a code "U202" as a search key from the operating panel 2, the operating parameter communication means 11 transfers the input code to the operating parameter update means 12 (S101). The operating parameter update means 12 accesses the operating parameter storage means 13, and extracts the operating parameter attribute information corresponding to the code "U202" (S102). It is taken that the attribute information is now such that the initial value is "0", the lower limit value of possible setting is "-32768", the upper limit value is "32767", and the unit column is blank.

Then, the operating parameter update means 12 determines whether or not the code "U202" exists in the linked information storage means 14 (S103). In the case of this example, the code "U202" does not exist in the linked information storage means 14 ("NO" in S103), because of which the operating parameter update means 12 transmits the extracted attribute information and an operating parameter value "555" to the operating panel 2 via the operating parameter communication means 11.

As a result of this, the initial value is displayed unchanged as "0", the lower limit value of possible setting unchanged as "-32768", and the upper limit value unchanged as "32767" on the operating panel 2, as shown in Fig. 6. Also, as there is no unit information, the setting value is displayed unchanged as "555".

Meanwhile, when a replacement process is executed in step S103, the linked information storage means 14 is referred to by the operating parameter update means 12, and the update target index value for the code "U202" is extracted. Next, the operating parameter update means 12 acquires operating parameter attribute information corresponding to the extracted index value from the update operating parameter storage means 42 (S104).

The operating parameter update means 12 transmits the attribute information acquired from the update operating parameter storage means 42 and the operating parameter value "555" corresponding to the code "U202" saved in the operating parameter storage means 13 to the operating panel 2 via the operating parameter communication means 11 (S107).

At this point, it is taken that the attribute information of the update operating parameter storage means 42 is such that the initial value is "600", the lower limit value is "250", the upper limit value is "1200", the display unit is "Hz", and value display format information is "1/10". The value display format information is information that regulates how many decimal places are displayed, with "1/10" indicating a display to the first decimal place.

In this case, the initial value is displayed as "60. 0Hz", the lower limit value of possible setting as "25. 0Hz", the upper limit value as "120.0Hz", and the current setting value as "55.5Hz" on the operating panel 2, as shown in Fig. 7.

Heretofore, a description has been given of an attribute information replacement process in the operating parameter update means 12, and of a difference in the display details on the operating panel 2 depending on whether or not there is a replacement.

Also, the application program execution means 41 included in the PLC function unit 4 carries out execution management of a program compiled using IEC6113-3 compliant programming language (ladder (LD language), sequence function chart (SFC language), function block diagram (FBD language), structured text (ST language), and instruction list (IL language)) of, for example, a PLC. The application program may also be a program compiled using a general programming language such as the C language.

The heretofore described application program can read an operating parameter from, and write an operating parameter into, the update operating parameter storage means 42, and can change and adjust processing details in accordance with the operating parameter value. The application program execution means 41 can rewrite data of the update operating parameter storage means 42 when carrying out an initialization process or at an arbitrary timing.

As processing of an operating parameter for the drive control device is as carried out to date, a detailed description will be omitted, but attribute information of the operating parameter storage means 13 corresponding to a code allotted to the drive control device, and the operating parameter value, are displayed on an operating panel, and the drive control device program executes a process based on the operating parameter.

According to the embodiment, an operating parameter utilized by a PLC application program is also such that attribute information thereof can be changed in accordance with specifications of the application program. Also, an application program operating parameter can be displayed on an operating panel based on original attribute information, because of which PLC function and drive control device operating parameters can be managed centrally.

The invention not being limited to the heretofore described embodiment, various modifications thereof can be realized without departing from the scope of the invention.

For example, flag information indicating whether or not attribute information corresponding to the relevant operating parameter is set may be provided for each operating parameter from the operating panel 2 to the update operating parameter storage means 42, wherein the application program execution means 41 does not write in attribute information correlated to the relevant flag information when the flag information is set. By so doing, when there is a so-called hot start such that the device is reset without the power supply being turned off, operation can be carried out using a setting value already set by the user as an operating parameter, because of which the user can be relieved of the trouble of resetting.

### Reference Signs List

- 1: PLC function-incorporating drive control device
- 2: Operating panel
- 3: Communication line
- 4: PLC function unit
- 10: Main body
- 11: Operating parameter communication means
- 12: Operating parameter update means
- 13: Operating parameter storage means
- 14: Linked information storage means
- 41: Application program execution means
- 42: Update operating parameter storage means

### DRAWINGS

[FIG. 1]
   - 2: OPERATING PANEL
   - 4: PLC FUNCTION UNIT
   - 10: MAIN BODY
   - 11: OPERATING PARAMETER COMMUNICATION MEANS
   - 12: OPERATING PARAMETER UPDATE MEANS
   - 13: OPERATING PARAMETER STORAGE MEANS
   - 14: LINKED INFORMATION STORAGE MEANS
   - 41: APPLICATION PROGRAM EXECUTION MEANS
   - 42: UPDATE OPERATING PARAMETER STORAGE MEANS
[FIG. 2]
   - A: OPERATING PARAMETER STORAGE MEANS 13
   - B: CODE 1
   - C: ATTRIBUTE 1-1 (INITIAL VALUE)
   - D: ATTRIBUTE 1-2 (UPPER LIMIT VALUE)
   - E: ATTRIBUTE 1-3 (LOWER LIMIT VALUE)
   - F: ATTRIBUTE 1-4 (UNIT)
   - G: ATTRIBUTE 1-n
   - H: VALUE 1
   - I: CODE 2
   - J: ATTRIBUTE 2-1 (INITIAL VALUE)
   - K: ATTRIBUTE 2-2 (UPPER LIMIT VALUE)
   - L: ATTRIBUTE 2-3 (LOWER LIMIT VALUE)
   - M: ATTRIBUTE 2-4 (UNIT)
   - N: ATTRIBUTE 2-n
   - O: VALUE 2
   - P: CODE 3
   - Q: ATTRIBUTE 3-1 (INITIAL VALUE)
   - R: ATTRIBUTE 3-2 (UPPER LIMIT VALUE)
   - S: ATTRIBUTE 3-3 (LOWER LIMIT VALUE)
   - T: ATTRIBUTE 3-4 (UNIT)
   - U: ATTRIBUTE 3-n
   - V: VALUE 3
   - W: CODE m
   - X: ATTRIBUTE m-1 (INITIAL VALUE)
   - Y: ATTRIBUTE m-2 (UPPER LIMIT VALUE)
   - Z: ATTRIBUTE m-3 (LOWER LIMIT VALUE)
   - A1: ATTRIBUTE m-4 (UNIT)
   - B1: ATTRIBUTE m-n
   - C1: VALUE m
[FIG. 3]
   - A: UPDATE OPERATING PARAMETER STORAGE MEANS 42
   - B: INDEX 1
   - C: DATA PRESENT 1
   - D: ATTRIBUTE 1-1 (INITIAL VALUE)
   - E: ATTRIBUTE 1-2 (UPPER LIMIT VALUE)
   - F: ATTRIBUTE 1-3 (LOWER LIMIT VALUE)
   - G: ATTRIBUTE 1-4 (UNIT)
   - H: ATTRIBUTE 1-n
   - I: INDEX 2
   - J: DATA PRESENT 2
   - K: ATTRIBUTE 2-1 (INITIAL VALUE)
   - L: ATTRIBUTE 2-2 (UPPER LIMIT VALUE)
   - M: ATTRIBUTE 2-3 (LOWER LIMIT VALUE)
   - N: ATTRIBUTE 2-4 (UNIT)
   - O: ATTRIBUTE 2-n
   - P: INDEX 3
   - Q: DATA PRESENT 3
   - R: ATTRIBUTE 3-1 (INITIAL VALUE)
   - S: ATTRIBUTE 3-2 (UPPER LIMIT VALUE)
   - T: ATTRIBUTE 3-3 (LOWER LIMIT VALUE)
   - U: ATTRIBUTE 3-4 (UNIT)
   - V: ATTRIBUTE 3-n
   - W: INDEX x
   - X: DATA PRESENT x
   - Y: ATTRIBUTE x-1 (INITIAL VALUE)
   - Z: ATTRIBUTE x-2 (UPPER LIMIT VALUE)
   - A1: ATTRIBUTE x-3 (LOWER LIMIT VALUE)
   - B1: ATTRIBUTE x-4 (UNIT)
   - C1: ATTRIBUTE x-n
[FIG. 4]
   - A: LINKED INFORMATION STORAGE MEANS 14
   - B: CODE a
   - C: INDEX 1
   - D: CODE b
   - E: INDEX 2
   - F: CODE c
   - G: INDEX 3
   - H: CODE xxx
   - I: INDEX x
[FIG. 5]
   A START
      S101 ACQUIRE CODE OF OPERATING PARAMETER TO BE READ
      S102 READ ATTRIBUTE INFORMATION FROM OPERATING PARAMETER STORAGE MEANS 13
      S103 CODE IN LINKED INFORMATION STORAGE MEANS 14?
      S104 READ REPLACEMENT ATTRIBUTE INFORMATION FROM UPDATE OPERATING PARAMETER STORAGE MEANS 42
      S105 DATA PRESENT?
      S106 REPLACE ATTRIBUTE INFORMATION
      S107 TRANSMIT OPERATING PARAMETER VALUE AND ATTRIBUTE INFORMATION TO OPERATING PANEL
   B END
[FIG. 6]
   - A: INITIAL VALUE
   - B: SAVED VALUE
[FIG. 7]
   - A: INITIAL VALUE
   - B: SAVED VALUE
[FIG. 9]
   - A: MAXIMUM OUTPUT FREQUENCY
   - B: INITIAL VALUE
   - C: SAVED VALUE

## Claims

1. A PLC function-incorporating drive control device, comprising:
operating parameter storage means that, for each operating parameter, correlates and stores attribute information including an initial value and a unit of the operating parameter and a code for identifying the operating parameter;
an operating panel that receives a code input and displays an operating parameter value based on attribute information;
operating parameter communication means that receives a code input into the operating panel and transmits an operating parameter value correlated to the code and attribute information to the operating panel; and
a PLC function unit that realizes a function of a programmable logic controller, wherein
the operating parameter storage means stores a code allotted for an operating parameter of an application program that operates in the PLC function unit, the PLC function-incorporating drive control device further comprising:
update operating parameter storage means that, for each operating parameter of the application program, correlates and stores attribute information of the operating parameter and an index for identifying the operating parameter;
linked information storage means that saves linked information wherein a code of the operating parameter storage means and an index of the update operating parameter storage means are correlated; and
operating parameter update means that, when an index corresponding to a code received by the operating parameter communication means exists in the linked information storage means, extracts attribute information correlated to the index from the update operating parameter storage means, and transmits the attribute information and an operating parameter value corresponding to the code to the operating panel via the operating parameter communication means.

2. The PLC function-incorporating drive control device according to claim 1, comprising application program execution means that writes operating parameter attribute information for updating into the update operating parameter storage means.

3. The PLC function-incorporating drive control device according to claim 2, wherein the application program writes the linked information into the linked information storage means when the PLC function unit is started up.

4. The PLC function-incorporating drive control device according to claim 2 or 3, wherein
the update operating parameter storage means has flag information that prohibits a reading or writing of attribute information from or into the operating panel for each operating parameter, and
the application program execution means, when writing operating parameter attribute information into the update operating parameter storage means, sets the flag information corresponding to the operating parameter.

5. The PLC function-incorporating drive control device according to claim 2 or 3, wherein
the update operating parameter storage means has flag information that indicates whether or not attribute information corresponding to the operating parameter is set from the operating panel for each operating parameter, and
when the flag information is set, the application program execution means does not write the attribute information correlated to the flag information.
